# EUROPÄISCHE PATENTSCHRIFT

(11) **EP 3 405 692 B1**
(45) Veröffentlichungstag und Bekanntmachung des Hinweises auf die Patenterteilung: **01.09.2021**
(21) Anmeldenummer: 17700775.4
(22) Anmeldetag: 03.01.2017
(51) Int. Cl.: F16D 3/00, F16H 1/10, F16H 55/08, F16D 1/06, F16D 1/10

(54) **GETRIEBEWELLE, BAUTEILPAARUNG UND VERFAHREN ZUM BETRIEB EINER GETRIEBEWELLE**
GEAR SHAFT, COMPONENT PAIRING AND METHOD FOR OPERATING A GEAR SHAFT
ARBRE DE TRANSMISSION, APPARIEMENT DE PIÈCES ET PROCÉDÉ POUR FAIRE FONCTIONNER UN ARBRE DE TRANSMISSION

(30) Priorität: 22.01.2016 DE 102016101130
(43) Veröffentlichungstag der Anmeldung: 28.11.2018
(73) Patentinhaber: Magna PT B.V. & Co. KG, 74199 Untergruppenbach (DE)
(72) Erfinder: FRÖHLICH, Fabian, 74906 Bad Rappenau (DE); ROSENBOHM, Benjamin, 71672 Marbach (DE); SOYBELMANN, Igor, 71638 Ludwigsburg (DE); TREFZ, Markus, 74245 Löwenstein (DE)
(74) Vertreter: Rausch, Gabriele
(86) Internationale Anmeldenummer: PCT/EP2017/050047
(87) Internationale Veröffentlichungsnummer: WO 2017/125259

(56) Entgegenhaltungen:
- WO-A1-2011/160240
- CN-U- 204 061 606
- DE-A1- 2 721 571
- DE-A1-102013 004 324
- DE-C1- 4 415 033
- US-A1- 2013 252 748

## Beschreibung

Die Erfindung betrifft eine Getriebewelle zum Einsatz in verschiedenen Getriebetypen wie beispielsweise Differentialgetrieben in einem Kraftfahrzeug, eine Bauteilpaarung mit einer entsprechenden Getriebewelle sowie ein Verfahren zum Betrieb einer derartigen Getriebewelle.

Getriebe diverser Bauarten sind aus dem Stand der Technik seit langem bekannt.

Beispielsweise geht aus der DE 10 2012 022 636 A1 ein Querdifferential für ein Kraftfahrzeug hervor, das eine Antriebseinheit zum Antreiben von zwei Antriebsrädern aufweist, wobei das Querdifferential ein Eingangsglied umfasst, das mit einem Ausgang der Antriebseinheit koppelbar ist, sowie ein erstes und ein zweites Ausgangsglied, die mit jeweils einem der Antriebsräder koppelbar sind. Weiterhin ist eine Reibkupplung vorgesehen, die mit den Ausgangsgliedern verbunden ist, und wobei ein Aktuator vorgesehen ist, der dazu ausgebildet ist, die Reibkupplung zu betätigen, um eine Quersperre zwischen den Antriebsrädern einzurichten oder aufzuheben.

Die bekannten Getriebeformen weisen dabei je nach Bauform Schwachstellen auf, die zu Fehlfunktionen oder zur Zerstörung von Bauteilen führen können. Getriebewellen mit Verzahnungen, die hohe Kräfte übertragen müssen, gehören hierzu. Die Getriebewellen werden dabei durch die wirkenden Kräfte tordiert, wobei die Verzahnungen dazu tendieren, nicht mehr mit größtmöglicher Anlagefläche in eine entsprechende Gegenverzahnung zu greifen. In der Folge kann es bei Spitzenbelastungen zu einer Überschreitung der Zugfestigkeit der Getriebewelle kommen, da die Verzahnung nur noch an der Kante trägt.

Aus der WO 2011 160 240 A1 ist eine Nabenverbindung zwischen einem Wellenkörper und einem Nabenkörper bekannt. Dabei weist der Wellenkörper längsgerändelte Außenkonturen auf. In einer Ausführungsform erstreckt sich die längsgerändelte Außenkontur im Umfang stufenweise zunehmend, so dass ein erster und ein zweiter Teilbereich vorhanden ist, wobei die Teilbereiche direkt aneinander angeschlossen sind. Die Teilbereiche unterscheiden sich in ihren Außendurchmessern.

Aus der DE 44 150 33 C1 ist eine Naben-Wellen-Verbindung bekannt, wobei die Bauteile mit Verzahnungen versehen sind, die unterschiedliche Zahnflanken aufweisen.

Aus der DE 10 2013 004 324 A1 ist eine Naben-Wellen-Verbindung bekannt, mit einer Keilnutverzahnung die einen ersten und zweiten Abschnitt "aufweist, wobei die beiden Abschnitte in axialer Richtung voneinander beabstandet sind und die Zähne der Keilnutverzahnung des ersten und zweiten Abschnitts unterschiedliche Längsschnittformen aufweisen. Die DE 27 21 571 A1 zeigt eine Keilnutverzahnung mit einem einzigen Zahnabschnitt."

Es ist entsprechend Aufgabe der Erfindung, eine Getriebewelle anzugeben, welche auch bei Kraftspitzen eine zuverlässige Kraftübertragung gewährleistet bzw. die generell auf die Getriebewelle aufbringbare Last zu erhöhen, so dass auch im Normalbetrieb größere Kräfte übertragbar sind.

Die Aufgabe wird durch eine Getriebewelle mit den Merkmalen des Anspruchs 1, durch eine Bauteilpaarung mit den Merkmalen des Anspruchs 12 und durch ein Verfahren mit den Merkmalen des Anspruchs 13 gelöst.

Erfindungsgemäß ist dabei vorgesehen, dass eine Getriebewelle mit einer Keilnutverzahnung versehen ist, wobei die Keilnutverzahnung einen ersten axialen Abschnitt und einen zweiten axialen Abschnitt aufweist, wobei der erste Abschnitt und der zweite Abschnitt in axialer Richtung voneinander beabstandet sind, und wobei Zähne der Keilnutverzahnung des ersten Abschnitts eine Längsschnittform aufweisen, welche von einer Längsschnittform von Zähnen der Keilnutverzahnung des zweiten Abschnitts verschieden ist.

Gemäß einem weiteren Aspekt der Erfindung wird eine Bauteilpaarung einer Getriebewelle mit einem weiteren Bauteil angegeben, welches Bauteil eine zu der Keilnutverzahnung der Getriebewelle komplementäre Gegenverzahnung mit einem oder zwei vorzugsweise geradlinigen Abschnitten aufweist und wobei die Keilnutverzahnung und die Gegenverzahnung kämmend miteinander in Eingriff stehen, und wobei die Gegenverzahnung des weiteren Bauteils in axialer Richtung dauerhaft in Eingriff mit der Keilnutverzahnung des ersten Abschnitts steht und bei Erhöhung einer auf die Getriebewelle wirkenden Torsionskraft die Gegenverzahnung in Eingriff mit der Keilnutverzahnung beider Abschnitte steht.

Gemäß einem anderen vorteilhaften Aspekt der Erfindung wird ein Verfahren zum Betrieb einer Getriebewelle beschrieben, wobei in einem ersten Betriebszustand eine erste Torsionskraft auf die Getriebewelle wirkt, die eine erste Torsion der Getriebewelle hervorruft, aufgrund welcher eine Kraftübertragung über den ersten Abschnitt der Keilnutverzahnung erfolgt, und in einem zweiten Betriebszustand eine zweite Torsionskraft, welche größer als die erste Torsionskraft ist, auf die Getriebewelle wirkt, die eine zweite Torsion der Getriebewelle hervorruft, welche größer als die erste Torsion ist, und aufgrund welcher eine Kraftübertragung über den ersten und den zweiten Abschnitt der Keilnutverzahnung erfolgt.

Vorteilhafterweise ist es dadurch möglich, die Getriebewelle in unterschiedlichen Lastbereichen gleichermaßen zuverlässig zu betreiben. Kraftspitzen in bestimmten Betriebszuständen eines Kraftfahrzeuges, welche im Stand der Technik zu Brüchen der Getriebewelle führen können, können durch die erfindungsgemäße Auslegung der Keilnutverzahnung einfach und zuverlässig aufgenommen werden. In einem ersten Lastbereich, welcher im Dauerbetrieb die Regel darstellt, findet die Kraftübertragung über den ersten Abschnitt der Keilverzahnung statt, in welchem eine erste Längsschnittform der Zähne vorliegt, während in Lastbereichen, die Ausnahmesituationen entsprechen, die Kraftübertragung über beide Abschnitte der Keilnutverzahnung erfolgt. Die Zähne der Keilnutverzahnung weisen hierzu in den beiden Abschnitten unterschiedliche Längsschnittformen auf, welche so gestaltet sind, dass bei Torsion der Getriebewelle unter Last eine Verdrehung stattfindet, welche die Zähne der Keilnutverzahnung des zweiten Abschnitts mit der Gegenverzahnung in Eingriff bringt. Somit steht bei Lastspitzen eine größere Fläche zur Kraftübertragung zur Verfügung.

Erfindungsgemäß ist die Längsschnittform der Zähne der Keilnutverzahnung des ersten Abschnitts im Wesentlichen rechteckig. Dies ist die gängige bewährte Variante einer Keilnutverzahnung, deren Vorteile von Zuverlässigkeit und guter Kraftübertragung voll genutzt werden können.

Weiterhin, ist erfindungsgemäß die Längsschnittform der Zähne der Keilnutverzahnung des zweiten Abschnitts im Wesentlichen trapezförmig. Diese Längsschnittform stellt sicher, dass bei einer Verdrehung der Getriebewelle unter einer Torsionskraft die Welle so verdreht wird, dass die Zähne ebenfalls mit der Gegenverzahnung in Eingriff kommen. Die Krafteinleitung erfolgt dann wieder über die gesamte Flankenfläche und nicht nur über eine Kante, so dass eine zuverlässige Kraftübertragung gewährleistet ist.

Erfindungsgemäß ist die Längsschnittform der Zähne gleichschenkelig trapezförmig für Getriebewellen mit umkehrbarer Drehrichtung. Dadurch kann die Erfindung in einer Vielzahl von Positionen zum Einsatz kommen Insbesondere kann die Keilnutverzahnung des zweiten Abschnitts an einem dem ersten Abschnitt zugewandten ersten Ende eine umfängliche Breite aufweisen, welche der umfänglichen Breite der Keilnutverzahnung des ersten Abschnitts entspricht. Hierdurch wird ein ruckfreier Eingriff beim Übergang zwischen Normalbetrieb und Lastspitzen ermöglicht.

Entsprechend ist weiter von Vorteil, dass eine umfängliche Breite des zweiten Abschnitts an einem dem ersten Abschnitt abgewandten zweiten Ende geringer ist als die umfängliche Breite am ersten Ende. Hierdurch wird bei Torsion der flächige Eingriff der Gegenverzahnung in die Keilnutverzahnung der Getriebewelle ermöglicht. Bevorzugt kann die umfängliche Breite des zweiten Endes des zweiten Abschnitts zwischen 0,05 und 0,5 mm, bevorzugt zwischen 0,1 und 0,3 mm, besonders bevorzugt etwa 0,2 mm gegenüber der umfänglichen Breite des ersten Endes reduziert sein, wobei die Reduktion für Getriebewellen mit umkehrbarer Drehrichtung an beiden Flanken der Zähne und für Getriebewellen mit nicht umkehrbarer Drehrichtung an einer Flanke der Zähne ausgeführt ist. Bei geeigneter Wahl der Reduktion kann eine erfindungsgemäße Getriebewelle für viele Verwendungszwecke konfiguriert werden.

Vorteilhafterweise kann weiterhin vorgesehen sein, dass eine axiale Länge des ersten Abschnitts größer ist als eine axiale Länge des zweiten Abschnitts. Dies ist sinnvoll, da die Hauptlast des Normalbetriebs über den ersten Abschnitt der Keilnutverzahnung läuft und somit hier ausreichend Kraftübertragungsfläche zur Verfügung stehen muss. Die zusätzliche Keilnutverzahnung des zweiten Abschnitts muss nur bei Lastspitzen zur Verfügung stehen, so dass hier eine geringere axiale Länge ausreichend ist.

Je nach Einbauposition und sonstigen Gegebenheiten des Getriebes kann ein Verhältnis der axialen Länge des ersten Abschnitts zur axialen Länge des zweiten Abschnitts zwischen 0,8 und 1 ,8, bevorzugt zwischen 1 und 1,6, besonders bevorzugt etwa 1,3 betragen.

Vorteilhafterweise kann vorgesehen sein, dass Zähne der Keilnutverzahnung des ersten Abschnitts fluchtend mit Zähnen der Keilnutverzahnung des zweiten Abschnitts ausgebildet sind. Dies ist in Hinblick auf einen reibungslosen Übergang zwischen den beiden Abschnitten vorzuziehen.

Bevorzugt kann der erste Abschnitt an einem freien Ende der Getriebewelle und der zweite Abschnitt an einem Ende der Getriebewelle ausgebildet sein, welche einem Getriebewellenflansch zugewandt ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 ein beispielhaftes Differentialgetriebe mit einer erfindungsgemäß ausgeführten Getriebewelle in einer schematisierten Schnittdarstellung,
Fig. 2 die erfindungsgemäße Getriebewelle gemäß Fig. 1 in einer perspektivischen Ansicht, und
Fig. 3 eine stark vereinfachte Schemazeichnung der Längsschnittformen der Keilnutverzahnung der Getriebewelle gemäß Fig. 2.

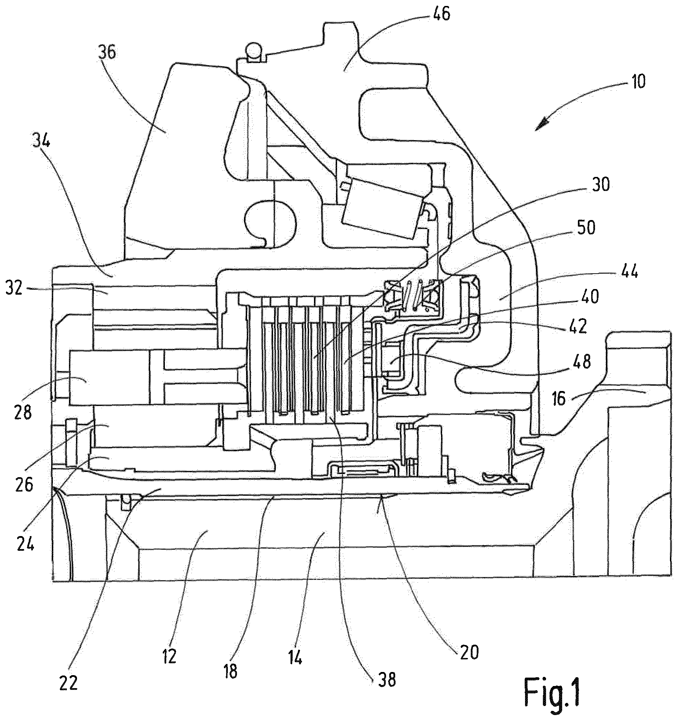

Fig. 1 zeigt in einer stark schematisierten Schnittzeichnung ein beispielhaftes Differentialgetriebe 10 für ein Kraftfahrzeug, welches Differentialgetriebe 10 zur Anwendung mit einer erfindungsgemäß ausgestalteten Getriebewelle 12 geeignet ist. Das Differentialgetriebe 10 ist dabei in Form eines Planetengetriebes 10 ausgebildet. Es ist weiterhin sperrbar ausgeführt, um beispielsweise in einem allradgetriebenen Fahrzeug die von einem Antriebsaggregat bereitgestellte Antriebskraft gleichmäßig auf nicht weiter dargestellte angetriebene Räder übertragen zu können. Die Getriebewelle 12 weist dabei im dargestellten Ausführungsbeispiel einen Wellenabschnitt 14 und einen Getriebeflansch 16 auf, an welchem beispielsweise ein nicht weiter dargestelltes Rad oder eine Seitenwelle hierfür angeflanscht sein kann.

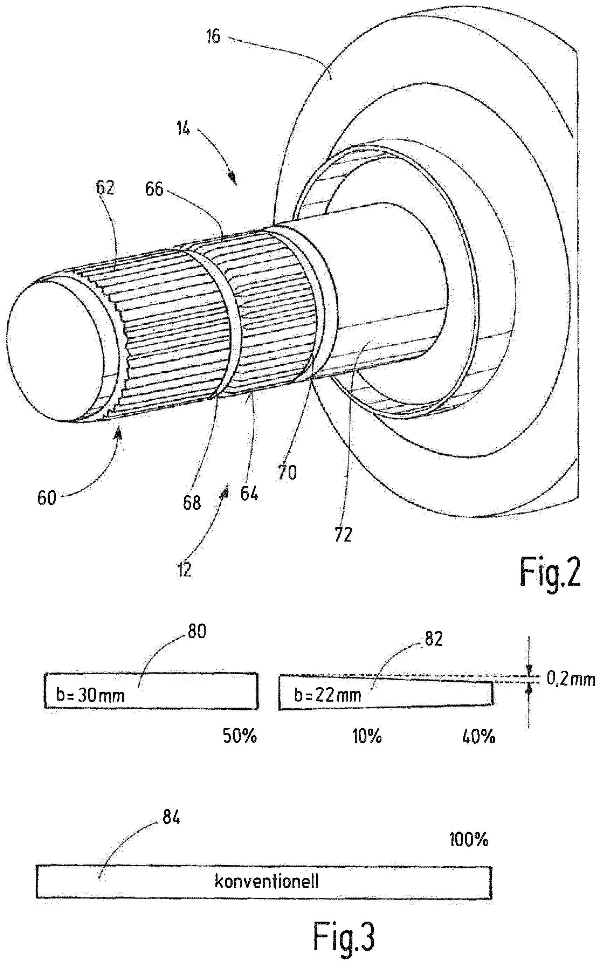

Die Getriebewelle 12 weist, wie weiter unten unter Bezugnahme auf Fig. 2 und 3 näher erläutert wird, an ihrem Wellenabschnitt 14 eine Keilnutverzahnung 18 auf, welche mit einer komplementären Gegenverzahnung 20 einer Hohlwelle 22, welche von dem Wellenabschnitt 14 der Getriebewelle 12 durchgriffen wird, kämmend in Eingriff steht. Das in Fig. 1 nur sehr schematisiert dargestellte Planetengetriebe 10 wird im Folgenden unter Bezugnahme auf seine wichtigsten Bauteile kurz erläutert. In dem Planetengetriebe 10 ist ein Sonnenrad 24 vorgesehen, welches mit der Hohlwelle 22 verbunden ist. Das Sonnenrad 24 wirkt seinerseits mit Planetenrädern 26 zusammen, die an einem Planetenträger 28 angeordnet sind. Die Planetenräder 26 stehen ferner in Eingriff mit einem Hohlrad 32, welches mit einem Außenlamellenträger 34 verbunden ist. Der Außenlamellenträger 34 ist mit einem Tellerrad 36 verbunden.

Die Reibkupplung 30 ist vorzugsweise als Nasskupplung 30 ausgebildet und weist in grundsätzlich bekannter Weise Innenlamellen 38 sowie Außenlamellen 40 auf, die an dem Innenlamellenträger 24 bzw. dem Außenlamellenträger 34 angeordnet sind. Die Reibkupplung 30 kann durch einen Kolben 42 geschlossen werden, welcher in einem Zylinder 44 geführt wird, der Teil eines Gehäuses 46 bildet. Der Kolben 42 drückt dabei über ein Axiallager 48 gegen die Kraft eines Federpaketes 50 die Außenlamellen 40 und die Innenlamellen 38 zusammen, wodurch die Reibkupplung 30 geschlossen und eine drehfeste Verbindung zwischen dem Hohlrad 32 und der Getriebewelle 12 hergestellt wird. Das Planetengetriebe 10 wird dadurch gesperrt.

Fig. 2 zeigt in einer schematischen perspektivischen Ansicht die Getriebewelle 12 gemäß Fig. 1. Erkennbar sind wieder der Getriebewellenflansch 16 sowie der Wellenabschnitt 14. Der Wellenabschnitt 14 gliedert sich wiederum in mehrere Abschnitte, welche im Folgenden näher beschrieben werden.

Ein erster Abschnitt 60 weist eine erste Keilnutverzahnung 62 auf, welche mit einer in Fig. 2 nicht weiter dargestellten Gegenverzahnung der in Fig. 1 dargestellten Hohlwelle 22 kämmend in Eingriff steht. Der erste Abschnitt 60 ist dabei an einem dem Getriebewellenflansch 16 abgewandten Ende des Wellenabschnitts 14 ausgebildet.

Weiterhin ist ein zweiter Abschnitt 64 vorgesehen, welcher eine zweite Keilnutverzahnung 66 aufweist. Der zweite Abschnitt 64 ist in einem dem Getriebewellenflansch zugewandten Bereich des Wellenabschnitts 14 ausgebildet. Die Abschnitte 60 und 64 sind in axialer Richtung durch eine Nut 68 voneinander beabstandet. Die Nut 68 kann beispielsweise der Fluidversorgung der Getriebewelle 12 mit einem flüssigen Schmierstoff dienen. An den zweiten Abschnitt 64 können sich in axialer Richtung eine weitere Nut 70 sowie direkt an den Getriebewellenflansch 16 anschließend ein Abschnitt 72 ohne Verzahnung anschließen. Die jeweilige Ausgestaltung ist den Gegebenheiten des Differentialgetriebe 10 anzupassen und in Fig. 2 nur beispielhaft dargestellt.

Betrachtet man nun Fig. 3, erkennt man darin im oberen Teil stark schematisiert die Aufsicht auf jeweils einen Zahn 80, 82 der Keilnutverzahnungen 62, 66, die beispielsweise auf Höhe des Teilkreisdurchmessers der Keilnutverzahnung in Längsrichtung geschnitten ist. Links ist dabei ein Zahn 80 der ersten Keilnutverzahnung 62 des ersten Abschnitts 60 erkennbar, während rechts ein Zahn 82 der zweiten Keilnutverzahnung 66 des zweiten Abschnitts 64 erkennbar ist.

Im unteren Teil der Fig. 3 ist zum Vergleich eine Aufsicht auf einen Zahn 84 einer konventionellen Keilnutverzahnung dargestellt, der sich über die volle axiale Länge der beiden Abschnitte 60, 64 erstreckt.

Wie in Fig. 3 oben erkennbar, weist der Längsschnitt des Zahns 80 des ersten Abschnitts 60 einerseits eine andere Form und andererseits eine andere axiale Länge als der Längsschnitt des Zahns 82 des zweiten Abschnitts 64 auf. Der Zahn 80 ist im Ausführungsbeispiel mit einer axialen Länge von 30 mm angegeben, während der Zahn 82 eine axiale Länge von 22 mm aufweist. Andere Längenkombinationen, welche dem jeweiligen Anwendungsfall der Getriebewelle 12 angepasst sind, sind ebenfalls möglich. Das Verhältnis der axialen Längen des ersten Abschnitts 60 und des zweiten Abschnitts 64 zueinander kann dabei beispielsweise in einem Bereich von 0,8 bis 1,8, bevorzugt von 1 bis 1,6, besonders bevorzugt bei etwa 1,3 liegen.

Erfindungsgemäß ist die Längsschnittform des Zahns 80 rechteckig, während die Längsschnittform des Zahns 82 gleichschenklig trapezförmig ist. Dabei ist eine Verschmälerung an der einen und an der anderen Flanke des Zahns 82 vorgesehen. Die gleichseitige Trapezform ist für Getriebewellen 12 mit Drehrichtungsumkehr anwendbar. Es ist selbstverständlich auch möglich, die gleichseitige Trapezform für Getriebewellen 12 mit nicht umkehrbarer Drehrichtung zu verwenden, was bei der Getriebemontage von Vorteil ist, da nur ein Bauteil vorgehalten werden muss. Das dem ersten Abschnitt 60 zugewandte Ende des trapezförmigen Zahns 82 entspricht dabei in der umfänglichen Breite im Wesentlichen der umfänglichen Breite des Zahns 80. Das dem Getriebewellenflansch 16 zugewandte, verjüngte Ende weist eine Reduktion der umfänglichen Breite um beispielsweise 0,2 mm pro Flanke auf. Die Reduktion in der umfänglichen Breite kann sich in einem Bereich von 0,05 bis 0,5 mm, bevorzugt von 0,1 bis 0,3 mm, besonders bevorzugt von 0,25 bis 0,35 mm bewegen. Durch die gleiche umfängliche Breite der einander zugewandten Enden und weiterhin eine fluchtende Ausrichtung der Zähne 80, 82 in axialer Richtung ist ein ruckfreier Eingriff über die gesamte Länge der Abschnitte 60, 64 mit der Gegenverzahnung gewährleistet.

Die erfindungsgemäß ausgestaltete Getriebewelle 12 mit der in zwei Abschnitte 60, 64 aufgeteilten Keilnutverzahnung 18 ist gegenüber herkömmlichen Getriebewellen mit einer durchgehenden Verzahnung von Vorteil, da auch unter hohen Lastspitzen ein zuverlässiger Eingriff der Keilnutverzahnung 18 in die Gegenverzahnung 20 gewährleistet ist. Bei herkömmlichen Getriebewellen 12 mit durchgehender Verzahnung (dargestellt in Form des Zahns 84 in Fig. 3) wird durch Torsion der Getriebewelle 12 unter Last eine mit zunehmender axialer Länge geringer werdende Eingriffstiefe der Verzahnungen ineinander beobachtet. Im Normalbetrieb eines Getriebes 10 ist diese Torsion einkalkuliert.

Treten jedoch im Stand der Technik Lastspitzen auf, kann es sein, dass die Torsion so stark wird, dass die Verzahnungen nur noch an den Flankenkanten in Kontakt miteinander kommen und dass im axial am weitesten vom Angriffspunkt entfernten Bereich sogar kein Eingriff mehr vorliegt. Folgen können z.B. Überlaufen der Verzahnungen mit entsprechenden Beschädigungen auf beiden Bauteilen oder auch Materialbrüche im Übergangsbereich zwischen Wellenabschnitt 14 und Getriebewellenflansch 16 sein.

Die Getriebewelle 12 mit der in Abschnitte 60, 64 aufgeteilten Keilnutverzahnung 18 wird im Betrieb ebenfalls tordiert, die Kraftübertragung erfolgt dabei im Normalbetrieb in bekannter weise über die Keilnutverzahnung 62 des ersten Abschnitts 60. Jedoch kommt es mit weiter zunehmender Torsion bei Lastspitzen nun nicht mehr zu einem Abheben der Kanten oder Flanken der Bauteile, sondern die Gegenverzahnung 20 greift in die sich in axialer Richtung verjüngende Keilnutverzahnung 66 des zweiten Abschnitts 64 ein.

Dadurch kommt es einerseits zu einer Entlastung des ersten Abschnitts 60 und andererseits zu einem tiefen Eingriff im zweiten Abschnitt 64 mit weiterhin optimaler Kraftübertragung.

Während eine konventionelle Getriebewelle 12 über den gesamten axialen Längenverlauf der Verzahnung 84 tordiert und somit 100% der Torsionskraft an dem dem Getriebeflansch 16 nächstliegenden Bereich des Wellenabschnitts 14 auflaufen, kann gemäß der Erfindung eine Aufteilung der Torsionskraft auf etwa jeweils 50% auf die beiden Abschnitte 60, 64 erfolgen. Die Keilnutverzahnung 66 des Abschnitts 64, welcher dem Getriebewellenflansch 16 zugewandt ist, muss dementsprechend an seinem verjüngten Ende nur ca. 40% der Torsionskraft aufnehmen, gegenüber 100% bei herkömmlichen Getriebewellen 12. Es herrscht somit eine sehr viel geringere Torsionskraft mit weitaus geringerer Beanspruchung des Bauteils. Lastspitzen können so abgefangen und Beschädigungen vermieden werden. Außerdem ist es mit derartig ausgestalteten Getriebewellen 12 möglich, auch im Normalbetrieb eine höhere Last zu übertragen.

## Patentansprüche

1. Getriebewelle (12) mit einer Keilnutverzahnung (18), wobei die Keilnutverzahnung (18) einen ersten axialen Abschnitt (60) und einen zweiten axialen Abschnitt (64) aufweist, wobei der erste Abschnitt (60) und der zweite Abschnitt (64) in axialer Richtung voneinander beabstandet sind, wobei Zähne (80) der Keilnutverzahnung (62) des ersten Abschnitts (60) eine Längsschnittform aufweisen, welche von einer Längsschnittform von Zähnen (82) der Keilnutverzahnung (66) des zweiten Abschnitts (64) verschieden ist und die Längsschnittform der Zähne (80) der Keilnutverzahnung (62) des ersten Abschnitts (60) im Wesentlichen rechteckig ist und die Längsschnittform der Zähne (82) der Keilnutverzahnung (66) des zweiten Abschnitts (64) derart trapezförmig ist dass sich die umfängliche Breite des Zahns ändert und die Längsschnittform der Zähne (82) gleichschenkelig trapezförmig ist.

2. Getriebewelle (12) nach Anspruch 1, **dadurch gekennzeichnet, dass** die Keilnutverzahnung (66) des zweiten Abschnitts (64) an einem dem ersten Abschnitt (60) zugewandten ersten Ende eine umfängliche Breite aufweist, welche der umfänglichen Breite der Keilnutverzahnung (62) des ersten Abschnitts (60) entspricht.

3. Getriebewelle (12) nach einem der Ansprüche 1 oder 2, **dadurch gekennzeichnet, dass** eine umfängliche Breite des zweiten Abschnitts (64) an einem dem ersten Abschnitt (60) abgewandten zweiten Ende geringer ist als die umfängliche Breite am ersten Ende.

4. Getriebewelle (12) nach Anspruch 3, **dadurch gekennzeichnet, dass** die umfängliche Breite des zweiten Endes des zweiten Abschnitts (64) zwischen 0,05 und 0,5 mm, bevorzugt zwischen 0,1 und 0,3 mm, besonders bevorzugt etwa 0,2 mm gegenüber der umfänglichen Breite des ersten Endes reduziert ist, wobei die Reduktion für Getriebewellen (12) mit umkehrbarer Drehrichtung an beiden Flanken der Zähne (82) und für Getriebewellen (12) mit nicht umkehrbarer Drehrichtung an einer Flanke der Zähne (82) ausgeführt ist.

5. Getriebewelle (12) nach einem der vorstehenden Ansprüche, **dadurch gekennzeichnet, dass** eine axiale Länge des ersten Abschnitts (60) größer ist als eine axiale Länge des zweiten Abschnitts (64).

6. Getriebewelle (12) nach Anspruch 5, **dadurch gekennzeichnet, dass** ein Verhältnis der axialen Länge des ersten Abschnitts (60) zur axialen Länge des zweiten Abschnitts (64) zwischen 0,8 und 1,8, bevorzugt zwischen 1 und 1,6, besonders bevorzugt etwa 1,3 beträgt.

7. Getriebewelle (12) nach einem der vorstehenden Ansprüche, **dadurch gekennzeichnet, dass** die Zähne (80) der Keilnutverzahnung (62) des ersten Abschnitts (60) fluchtend mit den Zähnen (82) der Keilnutverzahnung (66) des zweiten Abschnitts (64) ausgebildet sind.

8. Getriebewelle (12) nach einem der vorstehenden Ansprüche, **dadurch gekennzeichnet, dass** der erste Abschnitt (60) an einem freien Ende der Getriebewelle (12) und der zweite Abschnitt (64) an einem Ende der Getriebewelle (12) ausgebildet ist, welche einem Getriebewellenflansch (16) zugewandt ist.

9. Bauteilpaarung mit einer Getriebewelle (12) gemäß einem der vorstehenden Ansprüche mit einem weiteren Bauteil, das eine zu der Keilnutverzahnung (18) der Getriebewelle (12) komplementäre Gegenverzahnung (20) mit einem oder zwei vorzugsweise geradlinigen Abschnitten aufweist und wobei die Keilnutverzahnung (18) und die Gegenverzahnung (20) kämmend miteinander in Eingriff stehen, **dadurch gekennzeichnet, dass** die Gegenverzahnung (20) des weiteren Bauteils in axialer Richtung dauerhaft in Eingriff mit der Keilnutverzahnung (62) des ersten Abschnitts (60) steht und bei Erhöhung einer auf die Getriebewelle (12) wirkenden Torsionskraft die Gegenverzahnung (20) in Eingriff mit der Keilnutverzahnung (62, 66) beider Abschnitte (60, 64) steht.

10. Verfahren zum Betrieb einer Getriebewelle (12) nach einem der Ansprüche 1 bis 8, wobei
- in einem ersten Betriebszustand eine erste Torsionskraft auf die Getriebewelle (12) wirkt, die eine erste Torsion der Getriebewelle (12) hervorruft, aufgrund welcher eine Kraftübertragung über den ersten Abschnitt (60) der Keilnutverzahnung (62) erfolgt, und
- in einem zweiten Betriebszustand eine zweite Torsionskraft, welche größer als die erste Torsionskraft ist, auf die Getriebewelle (12) wirkt, die eine zweite Torsion der Getriebewelle (12) hervorruft, welche größer als die erste Torsion ist, und aufgrund welcher eine Kraftübertragung über den ersten und den zweiten Abschnitt (60, 64) der Keilnutverzahnung (62, 66) erfolgt.

## Claims

1. Gear shaft (12) with a splined toothing (18), wherein the splined toothing (18) has a first axial portion (60) and a second axial portion (64), wherein the first portion (60) and the second portion (64) are spaced apart from each other in the axial direction, wherein teeth (80) of the splined toothing (62) of the first portion (60) have a longitudinal sectional shape which differs from a longitudinal sectional shape of teeth (82) of the splined toothing (66) of the second portion (64), and the longitudinal sectional shape of the teeth (80) of the splined toothing (62) of the first portion (60) is substantially rectangular, and the longitudinal sectional shape of the teeth (82) of the splined toothing (66) of the second portion (64) are trapezoidal in form in such a manner that the circumferential width of the tooth changes and the longitudinal sectional shape of the teeth (82) is in isosceles trapezoidal form.

2. Gear shaft (12) according to Claim 1, **characterized in that** the splined toothing (66) of the second portion (64) has, at a first end facing the first portion (60), a circumferential width which corresponds to the circumferential width of the splined toothing (62) of the first portion (60).

3. Gear shaft (12) according to either of Claims 1 and 2, **characterized in that** a circumferential width of the second portion (64) at a second end facing away from the first portion (60) is smaller than the circumferential width at the first end.

4. Gear shaft (12) according to Claim 3, **characterized in that** the circumferential width of the second end of the second portion (64) is reduced between 0.05 and 0.5 mm, preferably between 0.1 and 0.3 mm, particularly preferably approximately 0.2 mm in relation to the circumferential width of the first end, wherein the reduction is designed for gear shafts (12) having a reversible direction of rotation at both flanks of the teeth (82) and for gear shafts (12) having a non-reversible direction of rotation at one flank of the teeth (82).

5. Gear shaft (12) according to one of the preceding claims, **characterized in that** an axial length of the first portion (60) is greater than an axial length of the second portion (64).

6. Gear shaft (12) according to Claim 5, **characterized in that** a ratio of the axial length of the first portion (60) to the axial length of the second portion (64) is between 0.8 and 1.8, preferably between 1 and 1.6, particularly preferably approximately 1.3.

7. Gear shaft (12) according to one of the preceding claims, **characterized in that** the teeth (80) of the splined toothing (62) of the first portion (60) are formed in alignment with the teeth (82) of the splined toothing (66) of the second portion (64).

8. Gear shaft (12) according to one of the preceding claims, **characterized in that** the first portion (60) is formed at a free end of the gear shaft (12) and the second portion (64) is formed at an end of the gear shaft (12) that faces a gear shaft flange (16).

9. Component pairing with a gear shaft (12) according to one of the preceding claims with a further component which has a mating toothing (20) which is complementary to the splined toothing (18) of the gear shaft (12) and has one or two preferably rectilinear portions, and wherein the splined toothing (18) and the mating toothing (20) are in engagement with each other in a meshing manner, **characterized in that** the mating toothing (20) of the further component is permanently in engagement in the axial direction with the splined toothing (62) of the first portion (60), and, in the event of an increase in a torsional force acting on the gear shaft (12), the mating toothing (20) is in engagement with the splined toothing (62, 66) of the two portions (60, 64).

10. Method for operating a gear shaft (12) according to one of Claims 1 to 8, wherein
- in a first operating state a first torsional force acts on the gear shaft (12), which causes a first torsion of the gear shaft (12), owing to which force is transmitted via the first portion (60) of the splined toothing (62), and
- in a second operating state a second torsional force which is greater than the first torsional force acts on the gear shaft (12), which causes a second torsion of the gear shaft (12) that is greater than the first torsion, and owing to which force is transmitted via the first and the second portion (60, 64) of the splined toothing (62, 66).

## Revendications

1. Arbre de transmission (12) comportant une denture cannelée (18), la denture cannelée (18) comprenant une première partie axiale (60) et une deuxième partie axiale (64), la première partie (60) et la deuxième partie (64) étant espacées l'une de l'autre dans la direction axiale, des dents (80) de la denture cannelée (62) de la première partie (60) présentant une forme de section longitudinale, laquelle forme est différente d'une forme de section longitudinale de dents (82) de la denture cannelée (66) de la deuxième partie (64), et la forme de section longitudinale des dents (80) de la denture cannelée (62) de la première partie (60) étant sensiblement rectangulaire et la forme de section longitudinale des dents (82) de la denture cannelée (66) de la deuxième partie (64) étant trapézoïdale de telle sorte que la largeur périphérique des dents varie et que la forme de section longitudinale des dents (82) soit en forme de trapèze isocèle.

2. Arbre de transmission (12) selon la revendication 1, **caractérisé en ce que** la denture cannelée (66) de la deuxième partie (64) présente, à une première extrémité tournée vers la première partie (60), une largeur périphérique qui correspond à la largeur périphérique de la denture cannelée (62) de la première partie (60).

3. Arbre de transmission (12) selon l'une des revendications 1 et 2, **caractérisé en ce qu'**une largeur périphérique de la deuxième partie (64) est, à une deuxième extrémité opposée à la première partie (60), inférieure à la largeur périphérique à la première extrémité.

4. Arbre de transmission (12) selon la revendication 3, **caractérisé en ce que** la largeur périphérique de la deuxième extrémité de la deuxième partie (64) est réduite d'entre 0,05 et 0,5 mm, de préférence d'entre 0,1 et 0,3 mm, de manière particulièrement préférée d'approximativement 0,2 mm par rapport à la largeur périphérique de la première extrémité, la réduction pour des arbres de transmission (12) de sens de rotation réversibles étant réalisée au niveau des deux flancs des dents (82) et la réduction pour des arbres de transmission (12) de sens de rotation non réversibles étant réalisée au niveau d'un flanc des dents (82).

5. Arbre de transmission (12) selon l'une des revendications précédentes, **caractérisé en ce qu'**une longueur axiale de la première partie (60) est supérieure à une longueur axiale de la deuxième partie (64).

6. Arbre de transmission (12) selon la revendication 5, **caractérisé en ce qu'**un rapport de la longueur axiale de la première partie (60) à la longueur axiale de la deuxième partie (64) vaut entre 0,8 et 1,8, de préférence entre 1 et 1,6, de manière particulièrement préférée approximativement 1,3.

7. Arbre de transmission (12) selon l'une des revendications précédentes, **caractérisé en ce que** les dents (80) de la denture cannelée (62) de la première partie (60) sont réalisées en alignement avec les dents (82) de la denture cannelée (66) de la deuxième partie (64).

8. Arbre de transmission (12) selon l'une des revendications précédentes, **caractérisé en ce que** la première partie (60) est réalisée à une extrémité libre de l'arbre de transmission (12) et la deuxième partie (64) est réalisée à une extrémité de l'arbre de transmission (12) qui est tournée vers une bride d'arbre de transmission (16).

9. Appariement de pièces comportant un arbre de transmission (12) selon l'une des revendications précédentes avec une autre pièce qui présente une contre-denture (20) complémentaire à la denture cannelée (18) de l'arbre de transmission (12) et dotée d'une ou de deux parties de préférence rectilignes, et la denture cannelée (18) et la contre-denture (20) étant en prise par engrènement l'une avec l'autre, **caractérisé en ce que** la contre-denture (20) de l'autre pièce est en permanence en prise avec la denture cannelée (62) de la première partie (60) dans la direction axiale et, en cas d'augmentation d'une force de torsions agissant sur l'arbre de transmission (12), la contre-denture (20) est en prise avec la denture cannelée (62, 66) des deux parties (60, 64).

10. Procédé pour faire fonctionner un arbre de transmission (12) selon l'une des revendications 1 à 8, dans lequel
- dans un premier état de fonctionnement, une première force de torsion agit sur l'arbre de transmission (12), laquelle première force de torsion produit une première torsion de l'arbre de transmission (12), torsion en raison de laquelle une transmission de force via la première partie (60) de la denture cannelée (62) a lieu, et
- dans un deuxième état de fonctionnement, une deuxième force de torsion, qui est supérieure à la première force de torsion, agit sur l'arbre de transmission (12), laquelle deuxième force de torsion produit une deuxième torsion de l'arbre de transmission (12) qui est supérieure à la première torsion, et en raison de laquelle une transmission de force via la première et la deuxième partie (60, 64) de la denture cannelée (62, 66) a lieu.
